# EUROPEAN PATENT SPECIFICATION

(11) **EP 4 544 743 B1**
(45) Date of publication and mention of the grant of the patent: **11.11.2026**
(21) Application number: 22952420.2
(22) Date of filing: 28.07.2022
(51) Int. Cl.: H04L 12/46, H04L 9/40

(54) **METHOD, APPARATUS AND SYSTEM FOR COVERT PATH DISCOVERING AND COMPUTER-READABLE STORAGE MEDIUM**
VERFAHREN, VORRICHTUNG UND SYSTEM ZUR ENTDECKUNG VERDECKTER PFADE UND COMPUTERLESBARES SPEICHERMEDIUM
PROCÉDÉ, APPAREIL ET SYSTÈME DE DÉCOUVERTURE DE CHEMIN ET MOYEN DE STOCKAGE LISIBLE PAR ORDINATEUR

(43) Date of publication of application: 30.04.2025
(73) Proprietor: Siemens Aktiengesellschaft, 80333 München (DE)
(72) Inventor: GUO, Daifei, Beijing 100102 (CN)
(74) Representative: Isarpatent
(86) International application number: PCT/CN2022/108741
(87) International publication number: WO 2024/020962

(56) References cited:
- CN-A- 103 491 108
- CN-A- 105 162 835
- CN-A- 112 578 694
- CN-A- 112 910 847
- CN-B- 106 709 613
- US-A1- 2016 301 704
- ADAR OVADYA ET AL: "Cross-Router Covert Channels", ARXIV.ORG, CORNELL UNIVERSITY LIBRARY, 201 OLIN LIBRARY CORNELL UNIVERSITY ITHACA, NY 14853, 7 August 2019 (2019-08-07), XP081457451

## Description

### TECHNICAL FIELD

Embodiments of the present disclosure relate to the technical field of OT security monitoring, and in particular to a method, apparatus and system for covert path discovering in OT security monitoring and a computer-readable storage medium.

### BACKGROUND

CN 105 162 835 A describes a method and system for managing network information in a network environment, in particular involving registration and exchange of information relating to network elements and their interconnections across different network segments.

CN 106 709 613 B describes techniques for analysing network structures, including modelling relationships between network entities and evaluating possible paths within a network, in particular in the context of network security analysis.

In an industrial control system, industrial control devices work together to control industrial processes. Some of the industrial control devices, such as PLC, industrial hosts, working stations are connected via a network, which is usually called an OT (operational technology) network to differentiate from a traditional IT (information technology) network.

With the development of industrial digitalization, OT networks and IT networks are more and more connected, which may expose OT networks to cyberattacks, malware intrusions and other kinds of threat from IT networks.

Security devices, such as firewalls, can isolate logically an OT network from an IT network. Physical isolation can also be applied to disrupt threats from the IT network. With security policies set on security devices, an OT network and connected IT network(s) can be divided into different security zones, devices in the same security zone can communicate with each other freely, while devices in different security zones cannot.

However, such isolations may be bypassed via covert paths across different security zones. A covert path, otherwise known as covert channel or concealed channel, is a network connection across different security zones, which is unknown to the network management system or the network administrator. For example, a server with multiple network interface cards deployed on border of an OT network may cause potential access path from an IT network to the OT network. In addition, IoT (internet of things) devices used for data collecting may also create covert paths across production control systems in an OT network and monitoring system in an IT network. Covert paths are unknown by the network management system, which may bring great potential risk to the OT network.

### SUMMARY

The scope of the invention is defined by the independent claims.

In view of this, embodiments of the present disclosure provide a method, apparatus and system for covert path discovering in OT security monitoring and a computer-readable storage medium, to find covert paths across different security zones among an OT network and at least one connected IT network.

According to a first aspect of the embodiments of the present disclosure, a method for covert path discovering in OT security monitoring is provided, which can be executed by a central OT security monitoring server. The central OT security monitoring server can be connected to at least one data collector and receive IP configuration data from the at least one data collector; the at least one data collector is connected to an OT network. The method can include following steps: receiving IP configuration data of network connections from the at least one data collector, wherein the IP configuration data can be acquired by the at least one data collector from network flow data, IP configuration data of network interface cards installed on OT devices in the OT network and log of permitted communications in at least one security device in the OT network, etc.; identifying subnets among the OT network and at least one IT network connected to the OT network based on the IP configuration data; determining different security zones among the OT network and the at least one IT network based on the identified subnets; discovering at least one covert path across a first identified subnet and a second identified subnet, wherein the first identified subnet belongs to a first determined security zone, and the second identified subnet belongs to a second determined security zone..

According to a second aspect of the embodiments of the present disclosure, an apparatus for covert path discovering in OT security monitoring is provided, the apparatus can be implemented as software installed on the central OT security monitoring server, including modules to execute the the method according to the first aspect of the embodiments of the present disclosure.

According to a third aspect of the embodiments of the present disclosure, an apparatus for covert path discovering in OT security monitoring is provided, which can be part of the central OT security monitoring server, or the central OT security monitoring server itself. The apparatus can include at least one memory, configured to store computer executable instructions;
at least one processor, coupled to the at least one memory and upon execution of the computer executable instructions, configured to execute method according to the first aspect of the embodiments of the present disclosure.

According to a fourth aspect of the embodiments of the present disclosure, a system for covert path discovering in OT security monitoring is provided, it can include at least one data collector connected to an OT network, configured to acquired IP configuration data of network connections among the OT network and at least one IT network connected to the OT network; a central security monitoring center connected with the at least one data collector, wherein the central security monitoring center can include the apparatus according to the second or the third aspect of the embodiments of the present disclosure.

According to a fifth aspect of the embodiments of the present disclosure, a computer program product is provided, which can be stored on a readable medium of an apparatus, and includes computer executable instructions, wherein the computer executable instructions, when executed, cause at least one processor to execute the method according to the first aspect of the embodiments of the present disclosure.

According to a sixth aspect of the embodiments of the present disclosure, A computer-readable storage medium is provided, which stores computer executable instructions thereon, wherein the computer executable instructions, when executed, can cause at least one processor to execute the method according to the first aspect of the embodiments of the present disclosure.

In the embodiments of the present disclosure, IP configuration data of network connections can be received timely from the OT network via data collectors, subnets involved in the network connections can be acquired based on the IP configuration data. Based on whether the subnets involved in a network connection belong to the same security zone, potential covert path(s) between different security zones can be recognized as many as possible. Missing possible covert path can be avoided.

### BRIEF DESCRIPTION OF DRAWINGS

To more clearly describe the technical solutions in embodiments of the present disclosure or the prior art, the accompany drawings to be used in the description of the embodiments or the prior art will be briefly introduced below. Apparently, the accompanying drawings in the description below are merely some embodiments disclosed in the embodiments of the present disclosure. For those of ordinary skills in the art, other drawings may also be obtained based on these drawings.
FIG. 1 is a schematic diagram of a system for covert path discovering in OT security monitoring according to an embodiment of the present disclosure;
FIG. 2 is a flowchart of a method for covert path discovering in OT security monitoring according to an embodiment of the present disclosure;
FIG. 3 is a schematic diagram of an apparatus for covert path discovering in OT security monitoring according to an embodiment of the present disclosure.

**Reference numerals in the figures**

| | | | | | |
|---|---|---|---|---|---|
| 100: | a system for co vertpath discoveringin OT security monitoring | | | | |
| 10: | acentral security monitoring center | | | 20: | data collector |
| 30: | OT network | 40: | ITnetwork | | |
| 301: | network device | 302: | OT device | 303: | security device |
| 200: | a method for covert pathdiscoveringin OT securitymonitoring | | | | |
| S201: | receiving IP configurationdataof network connections | | | | |
| S202: | identifying subnets | | | | |
| S203: | determining security zones | | | | |
| S2031 : | counting number of OT devices involved in network connectionsacross two identified subnets | | | | |
| S2032 : | determining the twoidentifiedsubnets belong todifferentzones, if thenumber of OTdevices involved innetworkconnections across the twoidentifiedsubnets is less thana predefined threshold | | | | |
| S2033 : | determining different security zones according to predefined relationship betweensecurity zonesand their included subnets | | | | |
| S204: | discovering covertpath(s) | | | | |
| S2041 : | determining a network across the first identified subnet and the second | | | | |
| identified subnet | as a covert path if the network connection is not predefined as permitted by securitypolicies in the OT network | | | | |
| S2042 : | determining that a networkconnection across the first identified subnet and the second identifiedsubnet is a covertpath, whereinthe first identifiedsubnetbelongs to the firstdetermined security zone and the secondidentifiedsubnet belongs tothe secondsecond determined security zone | | | | |
| 101: | an apparatus for covert path discovering in OT security monitoring | | | | |
| 1011: | at least one memory | 1012: | at lest one processor | 1013: | communication module |

### DETAILED DESCRIPTION

To enable those skilled in the art to better understand the technical solutions in embodiments of the present disclosure, the technical solutions in the embodiments of the present disclosure will be clearly and completely described below with reference to the accompanying drawings in the embodiments of the present disclosure. Apparently, the described embodiments are merely a part, instead of all, of the embodiments of the present disclosure. All other embodiments obtained by those of ordinary skills in the art based on embodiments among the embodiments of the present disclosure shall fall within the scope of protection of the embodiments of the present disclosure.

Specific implementations of the embodiments of the present disclosure will be further described below with reference to the accompanying drawings in the embodiments of the present disclosure.

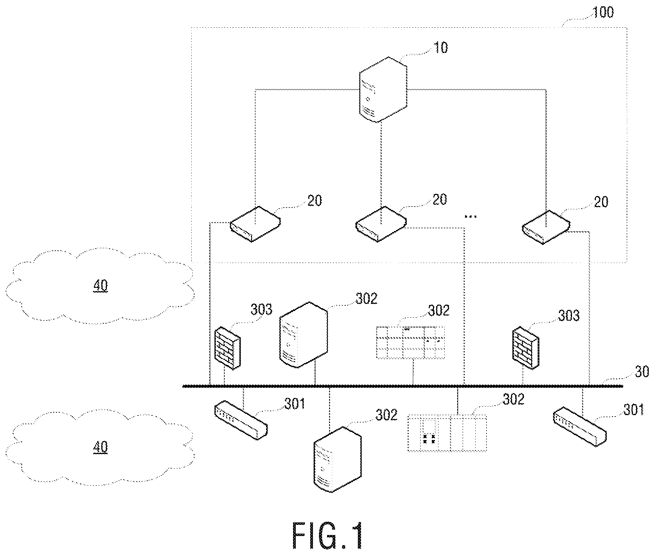

FIG. 1 shows a system 100 for covert path discovering for an OT network.

For the covert path analysis in the present disclosure is for an OT network, the methods of data acquisition and covert path discovering are related to the structure of an OT network. So firstly, a common structure of an OT network will be introduced.

### OT network

As shown in FIG.1, an OT network 30 can include:

### - OT devices 302

OT devices can include industrial controllers, industrial hosts, etc. An industrial controller can be a PLC (programmable logical controller), a DCS (distributed control system) controller, a RTU (remote terminal unit), etc. An industrial host can include a host computer such as a workstation or a server implemented based on a PC (personal computer), for example, an engineer station, an operator station or a server. Industrial hosts may further include an HMI (human machine interface). In an OT network, industrial hosts monitor and control the industrial controllers. Control industrial controllers can read data from field devices (for example, read a status parameter of the field device from a sensor), store the data in a historical database, and send control commands to industrial controllers according to instructions of an operator or according to a preset control program or logic. The engineer station may also configure industrial controllers.

### - network devices 301

With network devices such as switches and routers, data can be transmitted among an OT network. For example, network devices can connect industrial controllers to industrial hosts. Currently, a growing quantity of OT networks are implemented based on industrial Ethernet, and communication in an OT network can base on the TCP (transmission control protocol), UDP (user datagram protocol), IP (internet protocol).

### - security devices 303

Security devices can keep an OT network to work normally and safely, prevent cyberattacks from outside OT networks, such as attacks from an IT networks. As mentioned above, with the industrial digitalization, OT networks are connected with IT networks, which expose OT networks to cyberattacks, malware intrusion and other threats from IT networks. Security policies can be set on security devices to mitigate such risks. Security devices may include firewalls, antivirus software, security gateway, IDS (intrusion detection system), etc.

Now, referring to FIG.1, structure of the system 100 and methods of data acquisition from the OT network 30 will be introduced.

### Structure of the system 100

The system 100 may include a central security monitoring center 10 and at least one data collector 20. The at least one data collector 20 is connected to the OT network 30 to collect network connection data in the OT network 30 and extract IP configuration data of network connections from the network connection data. The central security monitoring center 10 receives IP configuration data from the data collectors 20 to analyze covert path in security monitoring for the OT network 30.

The central security monitoring center 10 can be implemented as one or multiple servers, which performs security monitoring on the OT network 30. It can receive data about the OT network 30 via the data collectors 20 and based on which to accomplish security monitoring, such as threat analysis, vulnerability scanning, risk assessment, etc. In present disclosure, the central security monitoring center 10 can receive IP configuration data via the data collectors 20, and based on the IP configuration data, to discover covert paths among the OT network 30 and at least one IT network 40 connected to the OT network 30.

The data collectors 20 can be connected to a SPAN (switched port analyzer) port of a network device 301 in the OT network 30, to perform port mirroring, so that all packets passing through ports of the network devices 301 can be captured. Alternatively, data collectors 20 can connect to network tap(s) to get packets in the OT network 30.. In this way, packets flow to the network tap from the OT network 30.

### Network connection data

In present disclosure, the network connection data may include but not limited to:
- network flow data
- IP configuration data of network interface cards installed on OT devices 302
- log of permitted communications in security devices 303

Once acquiring the network connection data, the data collectors 20 can extract IP configuration data of network connections from the network connection data and send to the central security monitoring center 10, which will identify subnets involved in the network connections. Network connections across subnets will be further identified by the central security monitoring center 10. To differentiate the filtered network connections, here we call the original network connections derived from the IP configuration data as "first network connections", call the network connections filtered from the first network connections, which are across a first identified subnet and a second identified subnet, wherein the first identified subnet belongs to a first determined security zone, and the second identified subnet belongs to a second determined security zone, as "second network connections".

Next, for each of the above 3 types of network connection data, the data collectors 20 will execute data collection and IP configuration data extraction. IP configuration data can include source IP address and destination IP address of a network connection; optionally, it can also include port, protocol, subnet and other related information.

### Data collection and IP configuration data extraction

### - network flow data

The data collectors 20 can collect network flow data and extract IP addresses from the network flow data, optionally, it can also extract port and protocol related information. One example of the extracted information can include:
(1) Source IP address
(2) Destination IP address
(3) Source Port
(4) Destination port
(5) Protocol used in the OT network traffic
(6) Vlan tag

The extracted information, that is the IP configuration data, will be sent to the central security monitoring center 10 for further analysis. For example, based on the source IP address and the destination IP address, the central security monitoring center 10 can identify subnets involved in the network connection.

### - IP configuration data of network interface cards installed on OT devices 302

The data collectors 20 can collect the host network configuration information and connection information by an agent installed on an OT device 302, then analyzes how many network interface cards are installed on the OT devices 302 and which of them are active, next extract IP configuration data of the active network interface cards. The data collectors 20 can get the IP configuration data, such as IP addresses and subnet information, through the agent installed on the OT devices 302. For example, they can run the command "Ipconfig /all" in the OT devices 302 with windows operating system to get the IP configuration data of network interface card(s).

### - log of permitted communications in security devices 303

The data collectors 20 can get logs of permitted communications in security devices 303, such as firewalls, and extract the source IP address and destination IP address from the allowed traffic in the log.

In addition, the data collectors 20 can directly get network connection data from network interface cards in the OT devices 302. For example, it can run the command "netstat" on an OT device 302 with windows operating system installed to get the network connection data, which can contain following information:
Source IP address
Destination IP address
Source Port
Destination port
Connection status

Based on the source IP address and the destination IP address, the central security monitoring center 10 can identify subnets related to the network connections. If the Connection status of one network connection is "ESTABLISHED", it means there is communication behavior.

### Subnets identification and second network connection filtering

For a first network connection, the subnet identification can rely on the source IP address and destination IP address. For IP addresses of type A, if the first 8 bits of source and destination IP address are the same, the first network connection is inside a subnet; otherwise, the first network connection is across two subnets. For IP addresses of type B, if the first 16 bits of source and destination IP addresses are the same, the first network connection is inside a subnet; otherwise, the first network connection is across two subnets. For IP addresses of type C, the subnet identification has to rely on the IP addresses and subnet mask. XOR of IP address and its subnet mask is the identifier of subnet. If the subnet of the source IP address is same with the destination IP address, the first network connection is inside same subnet; otherwise, the first network connection is across two subnets.

Then, the second network connections will be further filtered from the first network connections to get network connections across subnets in different security zones.

In present disclosure, covert path discovering is based on security zones analysis. The main idea is if there is a network connection across two subnets belonging to different security zones among the OT network 30 and the connected at least one IT network 40, and the network connection's existence is not known to the network management system or security monitoring, then the network connection will be determined as a covert path. Next, detailed description will be presented to introduce two optional schemes of covert path identification. Usually, a security zone includes at least one subnet, while a subnet only belongs to one specific security zone.

### Scheme 1. security zone determination and covert path identification

In scheme 1, there is no restriction on communication between the two subnets according to security policies in the OT network 30. Then for each two identified subnets, the central security monitoring center 10 can count number of OT devices 302 which are involved in the first network connections across the two subnets. If the number of OT devices 302 involved in the first network connections across the two subnets is less than a predefined threshold, the central security monitoring center 10 can determine the two subnets belong to different security zones.

For example, for subnet A with address "192.168.123.0" and subnet B with address "192.168.234.0", a first network connection with source IP address "192.168.123.6" and destination IP address "192.168.234.3", the subnet masks of the source IP address and the destination IP address are both "255.255.255.0", which means the OT devices 302 involved in the network connection belonging respectively to subnet A and subnet B (for example, there are more than one network interface cards installed on a specific OT device 302). Then the number of OT devices 302 involved in the first network connection across subnet A and subnet B can be added by 2. Optionally, if one specific OT device 302 is involved in several first network connections across subnet A and subnet B, the number of the specific OT device 302 can be added respectively for each first network connection.

There is no restriction on communication between the two subnets according to security policies in the OT network 30. Under such circumtances, if the number of OT devices 302 involved in the first network connections across subnet A and subnet B is not less than a predefined threshold and, subnet A and subnet B will be determined belonging to same security zone. For example, there are 10 OT devices 302 in subnet A and there are 10 OT devices 302 in subnet B, if the number of OT devices 302 involved in network connections across the two subnet is less than 8, it can be decided that the two subnets belong to different security zones.

To be noted that, although there might be not many OT devices 302 involved in first network connections across two specific subnets, the two specific subnets might be in same security zone with another subnet, then the central security monitoring center 10 can determine the two specific subnets are in the same security zone. For example, subnet A and subnet B are in the same security zone, subnet B and subnet C are in the same security zone according to the above mentioned method of counting OT devices 302. Although for subnets A and C, there are not many OT devices involved in first connections across subnets A and C, they can still be determined belonging to same security zone with subnet B.

With the determined security zones, the central security monitoring center 10 can determine a second network connection as a covert path if the second network connection is not predefined as permitted by security policies in the OT network 30. As explained above, a second network connection is across subnets belonging to different security zones. For example, an OT device 302 with two network interface cards connect an IT network 40 and the OT network 30 will be considered as an anomaly network connection which will not be defined in the security policies of security devices 303.

With scheme 1, although without clear definition of security zones, taking that covert paths are usually potential and not explicitly defined, security zones can be determined by the frequency of communications across subnets, combined with the available restriction rules on network communications.. The more OT devices 302 involved in communicantions across two subnets, the less possiblity the two subnets belong to different security zones.

### Scheme 2 predefined security zones and covert path identification

Different from scheme 1, in scheme 2, security zones are predefined. That is, whether subnets belong to same security zone is predefined. Preferably, information of security zones and included subnets can be stored in a DB and when discovering covert path, the information can be read from the DB.

When discovering covert paths, the central security monitoring center 10 can determine a second network connection as a covert path if the second network connection is across subnets belonging to different security zones according to the predefined relationship. As explained above, a second network connection is across subnets belonging to different security zones. With the predefined security zones, discovering covert path becomes easier.

For both scheme 1 and scheme 2, the central security monitoring center 10 can collect security policies from security devices 303 via data collectors 20 connected to the network devices 301. Allowed IP addresses and/or subnet information and the denied IP addresses and/or subnet information can be explicitly defined in the security policies.

The central security monitoring center 10 can inform discovered covert paths to a network administrator, to block them or make the traffic pass through the security devices 303, such as firewalls.

In the embodiments of the present disclosure, network connection data can be collected timely from the OT network via data collectors, with the network connection data, network connections can be derived and subnets involved in the network connections can be acquired. Based on whether the subnets involved in a network connection belong to same security zone, potential covert path(s) between different security zones can be recognized as many as possible. Missing possible covert path can be avoided.

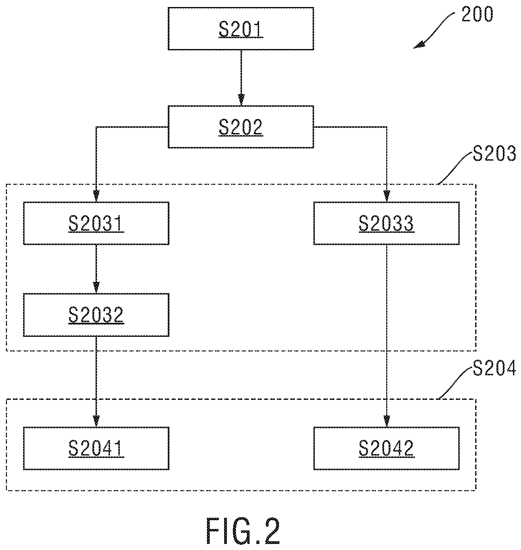

Now, referring to FIG.2, procedure of method 200 for covert path discovering in OT security monitoring will be introduced. As shown in FIG.2, the procedure can include following steps:
S201: receiving, from at least one data collector 20 connected to an OT network 30, IP configuration data of network connections among the OT network 30 and at least one IT network 40 connected to the OT network 30.

Optionally, the IP configuartion data can be acquired by the at least one data collector 20 from collected network flow data.

Optionally, the IP configuration data can include IP configuration data of network interface cards installed on OT devices 302 in the OT network 30.

Optionally, the IP configuration data can be acquired by the at least one data collector 20 from logs of permitted communications in at least one security device 303 in the OT network.

S202: identifying subnets among the OT network 30 and the at least one IT network 40 based on the IP configuration data.

S203: determining different security zones among the OT network 30 and the at least one IT network 40 based on the identified subnets.

S204: discovering at least one covert path across the identified subnets belonging to the determined different security zones.

Optionally, the step S203 can further include two sub steps S2031 and S2032. In the sub step S2031, if there is no restriction on communication between the two subnets according to security policies in the OT network 30, number of OT devices 302 involved in the network connections across two subnets will be counted, and in the sub steps S2032, the two subnets belonging to different security zones can be determined if the number of OT devices 302 involved in the network connections across the two subnets is less than a predefined threshold. Accordingly, the step S204 can further include sub step S2041, in the sub step S2041, it can be determined that a network connection across the first identified subnet and the second identified subnet is a covert path if the network connection is not predefined as permitted by security policies in the OT network 30.

Optionally, the step S203 can further include sub step S2033. In the sub step S2033, different security zones can be determined according to predefined relationship between security zones and their included subnets. Accordingly, the step S204 can further include sub step S2042. In the sub step S2042, it can be determined that a network connection across the first identified subnet and the second identified subnet is a covert path, wherein the first identified subnet belongs to the first determined security zone and the second identified subnet belongs to the second determined security zone. Here, the "first" and the "second" are used to differentiate two different items.

Other optional implementation of the method 200 can be referred to from the above details of the system 100.

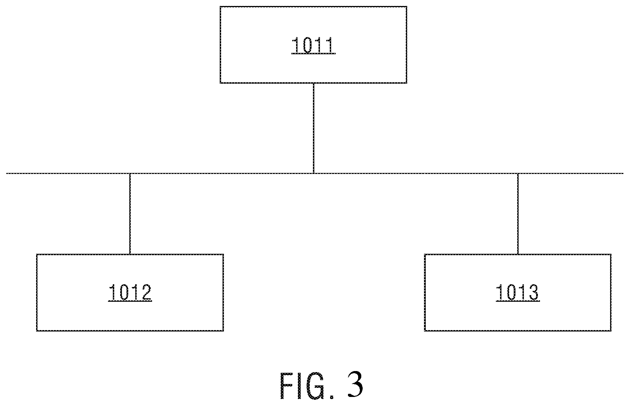

Now, referring to FIG.3, an apparatus 101 for covert path discovering in OT security monitoring will be introduced. As shown in FIG.3, the apparatus 101 can include at least one memory 1011, configured to store computer executable instructions; and at least one processor 1012, coupled to the at least one memory 1011 and upon execution of the computer executable instructions, configured to execute method 200. Optionally, the apparatus 101 can further include a communication module 1013, via which the apparatus 101 can receive network connection data and log of security devices 303 in the OT network 30.

Furthermore, another apparatus for covert path discovering in OT security monitoring is provide, which can be implemented as software installed on the central OT security monitoring server, including modules to execute the method 200.

A computer program product is provided. The computer program product is tangibly stored on a readable medium of a controller, and includes computer executable instructions, where the computer executable instructions, when executed, cause at least one processor to execute the method 200.

A computer readable storage medium is provided. The computer readable medium stores computer executable instructions thereon, where the computer executable instructions, when executed, cause at least one processor to execute the method 200.

It should be noted that, depending on the implementation requirements, the components/steps described in the embodiments of the present disclosure may be split into more components/steps, or two or more components/steps or partial operations of the components/steps may be combined into novel components/steps to achieve the goal of the embodiments of the present disclosure.

The above method according to the embodiments of the present disclosure may be implemented in hardware or firmware, or be implemented as software or computer code storable in a recording medium (such as a CD ROM, RAM, floppy disk, hard disk, or magnetic disk), or be implemented as computer code that is downloaded from a network, is originally stored in a remote recording medium or a non-transitory machine-readable medium, and will be stored in a local recording medium, such that the method described herein may be processed by such software stored on a recording medium using a general-purpose computer, a special-purpose processor, or programmable or dedicated hardware (such as an ASIC or FPGA). It is understandable that a computer, processor, microprocessor controller, or programmable hardware includes a storage component (e.g., RAM, ROM, or flash memory) that can store or receive software or computer code. The method for generating check code described herein is implemented when the software or computer code is accessed and executed by the computer, processor, or hardware. Further, when a general-purpose computer accesses the code for implementing the method for generating check code shown herein, the execution of the code converts the general-purpose computer to a special-purpose computer configured to execute the method for generating check code shown herein.

As will be appreciated by those of ordinary skills in the art, the various example units and method steps described in combination with the embodiments disclosed herein can be implemented by electronic hardware, or a combination of computer software and electronic hardware. Whether these functions are performed by hardware or software depends on specific applications and design constraints of the technical solutions. Those skilled in the art may implement described functions for each specific application using different methods, but such implementation should not be considered as falling beyond the scope of the embodiments of the present disclosure.

The above implementations are only used to illustrate the embodiments of the present disclosure, and are not intended to limit the embodiments of the present disclosure. Those of ordinary skills in the relevant technical field may further make various alterations and modifications without departing from the spirit and scope of the embodiments of the present disclosure. Therefore, all equivalent technical solutions also belong to the scope of the embodiments of the present disclosure, and the scope of patent protection of the embodiments of the present disclosure should be defined by the appended claims.

## Claims

1. A method (200) for covert path discovery in operational technology, OT, security monitoring, comprising:
- receiving (S201), from at least one data collector (20) connected to an OT network (30), Internet Protocol, IP, configuration data of network connections within the OT network (30) and at least one information technology, IT, network (40) connected to the OT network (30);
- identifying (S202) subnets in the OT network (30) and the at least one IT network (40) based on the IP configuration data;
- determining (S203) different security zones in the OT network (30) and the at least one IT network (40) based on the identified subnets;
- discovering (S204) at least one covert path across a first identified subnet and a second identified subnet by determining (S2041) that a network connection between the first identified subnet and the second identified subnet constitutes a covert path if the network connection is not permitted according to security policies in the OT network (30), wherein the first identified subnet belongs to a first determined security zone, and the second identified subnet belongs to a second determined security zone different from the first determined security zone.

2. The method (200) according to claim 1, wherein the IP configuration data is acquired by the at least one data collector (20) from collected network flow data in the OT network (30).

3. The method (200) according to claim 1, wherein the IP configuration data includes IP configuration data of network interface cards installed on OT devices (302) in the OT network (30).

4. The method (200) according to claim 1, wherein the IP configuration data is acquired by the at least one data collector (20) from logs of permitted communications in at least one security device (303) in the OT network (30).

5. The method (200) according to claim 1, wherein
- determining (S203) different security zones among the OT network (30) and the at least one IT network (40) based on the identified subnets comprises, for each pair of identified subnets, if there is no restriction on communication between the pair of identified subnets according to the security policies in the OT network (30),
- counting (S2031) the number of OT devices (302) involved in network connections between the pair of identified subnets;
- determining (S2032) that the pair of identified subnets belong to different security zones, if the number of OT devices (302) involved in network connections between the pair of identified subnets is less than a predefined threshold.

6. The method (200) according to claim 1, wherein
- determining (S203) different security zones among the OT network (30) and the at least one IT network (40) based on the identified subnets comprises:
- determining (52033) different security zones according to predefined relationship between security zones and subnets included in the security zones.

7. An apparatus (101) for covert path discovery in OT security monitoring, comprising:
- at least one memory (1011), configured to store computer executable instructions;
- at least one processor (1012), coupled to the at least one memory (1011) and configured, upon execution of the computer executable instructions, to execute the method according to any one of claims 1 to 6.

8. A system (100) for covert path discovery in OT security monitoring, comprising:
- at least one data collector (20) connected to an OT network (30), configured to acquire IP configuration data of network connections among the OT network (30) and at least one IT network (40) connected to the OT network (30);
- a central security monitoring center (10) connected to the at least one data collector (20),
wherein the central security monitoring center (10) includes the apparatus (101) according to claim 7.

9. A computer program product, being stored on a computer-readable medium of an apparatus, and comprising computer executable instructions, wherein the computer executable instructions, when executed, cause at least one processor to execute the method according to any one of claims 1 to 6.

10. A computer-readable storage medium, storing computer executable instructions thereon, wherein the computer executable instructions, when executed, cause at least one processor to execute the method according to any one of claims 1 to 6.

## Patentansprüche

1. Verfahren (200) zur Erkennung verdeckter Pfade bei der Sicherheitsüberwachung einer Betriebstechnologie, OT, das umfasst:
- Empfangen (S201), von mindestens einem mit einem OT-Netzwerk (30) verbundenen Datensammler (20), von Internet Protocol(IP)-Konfigurationsdaten von Netzwerkverbindungen innerhalb des OT-Netzwerks (30) und mindestens eines mit dem OT-Netzwerk (30) verbundenen Informationstechnologie(IT)-Netzwerks (40) ;
- Identifizieren (S202) von Subnetzwerken in dem OT-Netzwerk (30) und dem mindestens einen IT-Netzwerk (40) basierend auf den IP-Konfigurationsdaten;
- Bestimmen (S203) verschiedener Sicherheitszonen in dem OT-Netzwerk (30) und dem mindestens einen IT-Netzwerk (40) basierend auf den identifizierten Subnetzwerken;
- Erkennen (S204) mindestens eines verdeckten Pfads über ein erstes identifiziertes Subnetzwerk und ein zweites identifiziertes Subnetzwerk durch Bestimmen (S2041), dass eine Netzwerkverbindung zwischen dem ersten identifizierten Subnetzwerk und dem zweiten identifizierten Subnetzwerk einen verdeckten Pfad darstellt, wenn die Netzwerkverbindung gemäß Sicherheitsrichtlinien in dem OT-Netzwerk (30) nicht zulässig ist, wobei das erste identifizierte Subnetzwerk zu einer ersten bestimmten Sicherheitszone gehört und das zweite identifizierte Subnetzwerk zu einer zweiten bestimmten Sicherheitszone gehört, die sich von der ersten bestimmten Sicherheitszone unterscheidet.

2. Verfahren (200) nach Anspruch 1, wobei die IP-Konfigurationsdaten durch den mindestens einen Datensammler (20) aus gesammelten Netzwerkflussdaten in dem OT-Netzwerk (30) erfasst werden.

3. Verfahren (200) nach Anspruch 1, wobei die IP-Konfigurationsdaten IP-Konfigurationsdaten von Netzwerkschnittstellenkarten beinhalten, die auf OT-Vorrichtungen (302) in dem OT-Netzwerk (30) installiert sind.

4. Verfahren (200) nach Anspruch 1, wobei die IP-Konfigurationsdaten durch den mindestens einen Datensammler (20) aus Protokollen zulässiger Kommunikationen in mindestens einer Sicherheitsvorrichtung (303) in dem OT-Netzwerk (30) erfasst werden.

5. Verfahren (200) nach Anspruch 1, wobei
- das Bestimmen (S203) verschiedener Sicherheitszonen unter dem OT-Netzwerk (30) und dem mindestens einen IT-Netzwerk (40) basierend auf den identifizierten Subnetzwerken, für jedes Paar identifizierter Subnetzwerke, wenn keine Einschränkung der Kommunikation zwischen dem Paar identifizierter Subnetzwerke gemäß den Sicherheitsrichtlinien in dem OT-Netzwerk (30) besteht, umfasst
- Zählen (S2031) der Anzahl der OT-Vorrichtungen (302), die an Netzwerkverbindungen zwischen dem Paar identifizierter Subnetzwerke beteiligt sind;
- Bestimmen (S2032), dass das Paar identifizierter Subnetzwerke zu verschiedenen Sicherheitszonen gehört, wenn die Anzahl der OT-Vorrichtungen (302), die an Netzwerkverbindungen zwischen dem Paar identifizierter Subnetzwerke beteiligt sind, kleiner als ein vordefinierter Schwellenwert ist.

6. Verfahren (200) nach Anspruch 1, wobei
- das Bestimmen (S203) verschiedener Sicherheitszonen unter dem OT-Netzwerk (30) und dem mindestens einen IT-Netzwerk (40) basierend auf den identifizierten Subnetzwerken umfasst:
- Bestimmen (S2033) verschiedener Sicherheitszonen gemäß einer vordefinierten Beziehung zwischen Sicherheitszonen und Subnetzwerken, die in den Sicherheitszonen enthalten sind.

7. Einrichtung (101) zur Erkennung verdeckter Pfade bei der OT-Sicherheitsüberwachung, die umfasst:
- mindestens einen Speicher (1011), der dazu ausgelegt ist, computerausführbare Anweisungen zu speichern;
- mindestens einen Prozessor (1012), der mit dem mindestens einen Speicher (1011) gekoppelt ist und dazu ausgelegt ist, nach Ausführung der computerausführbaren Anweisungen das Verfahren nach einem der Ansprüche 1 bis 6 auszuführen.

8. System (100) zur Erkennung verdeckter Pfade bei der OT-Sicherheitsüberwachung, das umfasst:
- mindestens einen Datensammler (20), der mit einem OT-Netzwerk (30) verbunden ist und dazu ausgelegt ist, IP-Konfigurationsdaten von Netzwerkverbindungen unter dem OT-Netzwerk (30) und mindestens einem IT-Netzwerk (40), das mit dem OT-Netzwerk (30) verbunden ist, zu erfassen;
- ein zentrales Sicherheitsüberwachungszentrum (10), das mit dem mindestens einen Datensammler (20) verbunden ist, wobei das zentrale Sicherheitsüberwachungszentrum (10) die Einrichtung (101) nach Anspruch 7 beinhaltet.

9. Computerprogrammprodukt, das auf einem computerlesbaren Medium einer Einrichtung gespeichert ist und computerausführbare Anweisungen umfasst, wobei die computerausführbaren Anweisungen bei Ausführung bewirken, dass mindestens ein Prozessor das Verfahren nach einem der Ansprüche 1 bis 6 ausführt.

10. Computerlesbares Speicherungsmedium, das computerausführbare Anweisungen darauf speichert, wobei die computerausführbaren Anweisungen bei Ausführung bewirken, dass mindestens ein Prozessor das Verfahren nach einem der Ansprüche 1 bis 6 ausführt.

## Revendications

1. Procédé (200) de découverte de chemin caché dans la surveillance de sécurité de technologie opérationnelle, OT, comprenant :
- la réception (S201), en provenance d'au moins un collecteur de données (20) connecté à un réseau OT (30), de données de configuration de protocole Internet, IP, des connexions réseau au sein du réseau OT (30) et d'au moins un réseau informatique, IT, (40) connecté au réseau OT (30) ;
- l'identification (S202) des sous-réseaux dans le réseau OT (30) et du ou des réseaux IT (40) sur la base des données de configuration IP ;
- la détermination (S203) des zones de sécurité différentes dans le réseau OT (30) et du ou des réseaux IT (40) sur la base des sous-réseaux identifiés ;
- la découverte (S204) d'au moins un chemin caché entre un premier sous-réseau identifié et un second sous-réseau identifié en déterminant (S2041) qu'une connexion réseau entre le premier sous-réseau identifié et le second sous-réseau identifié constitue un chemin caché si la connexion réseau n'est pas autorisée selon des politiques de sécurité dans le réseau OT (30), le premier sous-réseau identifié appartenant à une première zone de sécurité déterminée et le second sous-réseau identifié appartenant à une seconde zone de sécurité déterminée différente de la première zone de sécurité déterminée.

2. Procédé (200) selon la revendication 1, dans lequel les données de configuration IP sont acquises par le ou les collecteurs de données (20) à partir de données de flux de réseau collectées dans le réseau OT (30).

3. Procédé (200) selon la revendication 1, dans lequel les données de configuration IP comprennent des données de configuration IP de cartes d'interface réseau installées sur des dispositifs OT (302) dans le réseau OT (30).

4. Procédé (200) selon la revendication 1, dans lequel les données de configuration IP sont acquises par le ou les collecteurs de données (20) à partir de journaux de communications autorisées dans au moins un dispositif de sécurité (303) dans le réseau OT (30).

5. Procédé (200) selon la revendication 1, dans lequel
- la détermination (S203) de zones de sécurité différentes parmi le réseau OT (30) et le ou les réseaux IT (40) sur la base des sous-réseaux identifiés comprend, pour chaque paire de sous-réseaux identifiés, s'il n'y a pas de restriction sur la communication entre la paire de sous-réseaux identifiés conformément aux politiques de sécurité dans le réseau OT (30),
- le décompte (S2031) du nombre de dispositifs OT (302) impliqués dans des connexions réseau entre la paire de sous-réseaux identifiés ;
- la détermination (S2032) que la paire de sous-réseaux identifiés appartient à des zones de sécurité différentes, si le nombre de dispositifs OT (302) impliqués dans des connexions réseau entre la paire de sous-réseaux identifiés est inférieur à un seuil prédéfini.

6. Procédé (200) selon la revendication 1, dans lequel
- la détermination (S203) de zones de sécurité différentes parmi le réseau OT (30) et le ou les réseaux IT (40) sur la base des sous-réseaux identifiés comprend :
- la détermination (S2033) de zones de sécurité différentes selon une relation prédéfinie entre les zones de sécurité et les sous-réseaux inclus dans les zones de sécurité.

7. Appareil (101) de découverte de chemin caché dans la surveillance de sécurité OT, comprenant :
- au moins une mémoire (1011), configurée pour stocker des instructions exécutables par ordinateur ;
- au moins un processeur (1012), couplé à la ou aux mémoires (1011) et configuré pour, lors de l'exécution des instructions exécutables par ordinateur, mettre en œuvre le procédé selon l'une quelconque des revendications 1 à 6.

8. Système (100) de découverte de chemin caché dans la surveillance de sécurité OT, comprenant :
- au moins un collecteur de données (20) connecté à un réseau OT (30), configuré pour acquérir des données de configuration IP de connexions réseau parmi le réseau OT (30) et au moins un réseau IT (40) connecté au réseau OT (30) ;
- un centre de surveillance de sécurité central (10) connecté au ou aux collecteurs de données (20), le centre de surveillance de sécurité central (10) comprenant l'appareil (101) selon la revendication 7.

9. Produit-programme d'ordinateur stocké sur un support lisible par ordinateur d'un appareil et comprenant des instructions exécutables par ordinateur, les instructions exécutables par ordinateur, lorsqu'elles sont exécutées, amenant au moins un processeur à mettre en œuvre le procédé selon l'une quelconque des revendications 1 à 6.

10. Support de stockage lisible par ordinateur, stockant des instructions exécutables par ordinateur, les instructions exécutables par ordinateur, lorsqu'elles sont exécutées, amenant au moins un processeur à mettre en œuvre le procédé selon l'une quelconque des revendications 1 à 6.
